(19)

Europäisches Patentamt
European Patent Office
Office européen des brevets

(11) **EP 2 437 249 A1**

(12) **EUROPEAN PATENT APPLICATION**
published in accordance with Art. 153(4) EPC

(43) Date of publication:
**04.04.2012 Bulletin 2012/14**

(21) Application number: **10780302.5**

(22) Date of filing: **28.05.2010**

(51) Int Cl.:
**G09G 3/34** *(2006.01)*     **G02F 1/167** *(2006.01)*
**G02F 1/17** *(2006.01)*     **G09G 3/20** *(2006.01)*

(86) International application number:
**PCT/JP2010/003608**

(87) International publication number:
**WO 2010/137342 (02.12.2010 Gazette 2010/48)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **28.05.2009 JP 2009129117**
**10.11.2009 JP 2009257432**

(71) Applicant: **Bridgestone Corporation**
**Tokyo 104-8340 (JP)**

(72) Inventors:
• **OHNO, Shingo**
**Kodaira-shi**
**Tokyo 187-8531 (JP)**

• **NISHII, Masayuki**
**Kodaira-shi**
**Tokyo 187-8531 (JP)**
• **TANAKA, Kanji**
**Kodaira-shi**
**Tokyo 187-8531 (JP)**

(74) Representative: **Oxley, Robin John George**
**Marks & Clerk LLP**
**90 Long Acre**
**London**
**WC2E 9RA (GB)**

(54) **INFORMATION DISPLAY SYSTEM AND INFORMATION DISPLAY METHOD**

(57)     In an information display system having at least one information display panel having a first panel substrate and a second panel substrate opposed to the first panel substrate, at least one of the two substrates being transparent at an information display screen area, and display media disposed between the first panel substrate and the second panel substrate and driven by an electric field, and a drive device formed separately with the information display panel and having a thin film transistor (TFT) substrate in which pixel electrodes with a thin film transistor (TFT) are disposed: the first panel substrate of the information display panel has conductivity along a surface direction; the second panel substrate of the information display panel has no conductivity along a surface direction; a surface at a side of the second panel substrate of the information display panel is disposed in such a manner that it is opposed in such a manner that it is opposed to a surface of the TFT substrate of the drive device, and a portion having a conductivity along a surface direction of the first panel substrate of the information display panel is electrically connected to the drive device; and the display media of the information display panel are moved by an electric field generated between the first panel substrate of the information display panel and the pixel electrodes on the TFT substrate of the drive device so as to display information on the information display screen region.

FIG. 1

**Description**

TECHNICAL FIELD

The present invention relates to an information display system including: at least one information display panel having a construction such that display media movable by applying an electric field thereto are sealed between a first panel substrate and a second panel substrate opposed to the first panel substrate, one of the two substrates situated at an observer side being transparent; and a drive device formed separately with the information display panel in which pixel electrodes each having a thin film transistor (TFT) are disposed, and also relates to an information display method using this system.

RELATED ART

Heretofore, the information display panel having a construction such that display media movable by applying an electric field thereto are sealed between a first panel substrate and a second panel substrate opposed to the first panel substrate, one of the two substrates situated at an observer side being transparent, is known. In the known information display panel, information is displayed by driving the display media.

In order to display information on the information display panel mentioned above, it is known a technique such that the panel, in which the display media movable by applying an electric field thereto are sealed, is set to a large drive device and the display media are moved by an electric field applied from the drive device so as to display an image (for example, refer to the patent document 1).

PRIOR ART DOCUMENTS

PATENT DOCUMENTS

Patent document 1: Patent Laid-Open Publication No. 2001-34199

SUMMARY OF THE INVENTION

TASKS TO BE SOLVED BY THE INVENTION

However, in an example described in the known patent document 1, there is a drawback such that, it is necessary to use a large printer-type drive device in the case of displaying information on the information display panel, and thus it is necessary to carry the information display panel to the large printer-type drive device in the case of rewriting a display content since the large printer-type drive device is a non-removable type,

An object of the invention is to provide an information display system and an information display method, which can eliminate the drawbacks mentioned above by using a thin-type and compact drive device and a thin-type and light-weight information display panel.

MEANS FOR SOLVING THE TASK

According to the invention, an information display system comprises: at least one information display panel having a first panel substrate and a second panel substrate opposed to the first panel substrate, at least one of the two substrates being transparent at an information display screen area, and display media disposed between the first panel substrate and the second panel substrate and driven by an electric field; and a drive device formed separately with the information display panel and having a thin film transistor (TFT) substrate in which pixel electrodes with a thin film transistor (TFT) are disposed; wherein the first panel substrate of the information display panel has conductivity along a surface direction; wherein the second panel substrate of the information display panel has no conductivity along a surface direction; wherein a surface at a side of the second panel substrate of the information display panel is disposed in such a manner that it is opposed in such a manner that it is opposed to a surface of the TFT substrate of the drive device, and a portion having a conductivity along a surface direction of the first panel substrate of the information display panel is electrically connected to the drive device; and wherein the display media of the information display panel are moved by an electric field generated between the first panel substrate of the information display panel and the pixel electrodes on the TFT substrate of the drive device so as to display information on the information display screen region.

In the present invention, it is necessary to use a panel substrate having no conductivity along a surface direction as the second panel substrate of the information display panel, to which the TFT substrate of the drive device, in which the pixel electrodes each having TFT are disposed, is opposed, If the second panel substrate of the information display panel has conductivity along a surface direction, whether respective pixel electrodes of the drive device are ON state or OFF state is not transmitted to a side of the information display panel. In this case, since an electric field based on a control by the drive device is not generated between the first panel substrate and the second panel substrate in the information display panel, it is not possible to display information by driving the display media of the information display panel.

Moreover, as a preferred embodiment of the information display system according to the invention, there are cases: such that a thickness of the second panel substrate is thinned than that of the first panel substrate; such that the pixel electrodes each having the thin film transistor (TFT) are disposed in a matrix manner in the TFT substrate in which the pixel electrodes each having the thin film transistor (TFT) are disposed; such that the pixel electrodes each having the thin film transistor (TFT) are disposed independently in the TFT substrate in which the pixel electrodes each having the thin film transistor (TFT) are disposed; such that dot electrodes are arranged on an inner surface of the substrate at a side of the second panel substrate of the information display panel; such that a film having a surface resistivity of $1.0 \times 10^5 \Omega$/sq, - $1.0 \times 10^{12} \Omega$/sq. is arranged on an outer surface of the second panel substrate of the information display panel; such that the first panel substrate having conductivity along a surface direction includes: a substrate formed by an insulation material; and a conducting film formed at the information display screen region on an inner surface of the substrate formed by an insulation material; such that the first panel substrate having conductivity along a surface direction includes: a substrate formed by a conducting material; and an isolation film coated on an overall outer surface of the substrate formed by a conducting material; and such that a protection film is disposed on a surface of the pixel electrode on the TFT substrate of the drive device.

Further, according to the invention, an information display method using the information display system mentioned above, comprises the steps of: disposing a surface at a side of the second panel of the information display panel to a surface of the TFT substrate of the drive device in an opposed manner; electrically connecting a portion having a conductivity along a surface direction of the first panel substrate of the information display panel to the drive device; and moving the display media of the information display panel by an electric field generated between the first panel substrate of the information display panel and the pixel electrodes on the TFT substrate of the drive device so as to display information on the information display screen region.

Furthermore, as a preferred embodiment of the information display method according to the invention, there is a case such that a surface at a side of the second panel substrate of the information display panel is disposed to a surface of the TFT substrate of the drive device in a contact and opposed manner.

EFFECT OF THE INVENTION

According to the invention, since, an information display system comprises: at least one information display panel having a first panel substrate and a second panel substrate opposed to the first panel substrate, at least one of the two substrates being transparent at an information display screen area, and display media disposed between the first panel substrate and the second panel substrate and driven by an electric field; and a drive device formed separately with the information display panel and having a thin film transistor (TFT) substrate in which pixel electrodes with a thin film transistor (TFT) are disposed; wherein the first panel substrate of the information display panel has conductivity along a surface direction; wherein the second panel substrate of the information display panel has no conductivity along a surface direction; wherein a surface at a side of the second panel substrate of the information display panel is disposed in such a manner that it is opposed in such a manner that it is opposed to a surface of the TFT substrate of the drive device, and a portion having a conductivity along a surface direction of the first panel substrate of the information display panel is electrically connected to the drive device; and wherein the display media of the information display panel are moved by an electric field generated between the first panel substrate of the information display panel and the pixel electrodes on the TFT substrate of the drive device so as to display information on the information display screen region, it is possible to display information to be displayed on the information display panel through the drive device, if the information display system including the thin-type and compact drive device and the thin-type and light-weight information display panel is prepared at its side.

Moreover, according to the invention, if the information display panel on which desired information is displayed is detached from the drive device, the displayed information is maintained on the information display panel. Therefore, it is possible to carry the information display panel as it is to another place. Further, an another information display panel of the information display system according to the invention may be set to the TFT substrate of the drive device so as to display the same information on a plurality of information display panels or so as to display different information on a plurality of information display panels.

Moreover, in the preferred embodiment of the information display panel constituting a part of the information display system according to the invention, since only a solid conductive film is formed on one panel substrate, it is not necessary to perform a patterning of the conductive film. Further, since it is not necessary to use IC for driving and a drawback on wiring such as a break or a leak does not occur, it is possible to manufacture an extremely inexpensive and highly reliable information display panel. Furthermore, since an electrical connection can be performed at only one portion of the solid conductive film so as to electrically connect the information display panel and the drive device, it is possible to make it easy to construct a circuit construction of the drive device. Moreover, since the TFT substrate is arranged to a side of the drive device and is arranged separately from the information display panel, it is possible to make the information display panel flexible even if the TFT substrate is rigid. Further, since the information display system according to the invention can be constructed by a thin-type and compact drive device and a plurality of flexible, thin-type and light-weight information display panels, the information display system according to the invention can be make it easy to take anywhere.

BRIEF DESCRIPTION OF THE DRAWINGS

[Fig. 1] Figs. 1a - 1b are schematic views respectively explaining a concept of an information display system and an information display method according to the invention.

[Fig. 2] Figs, 2 is a schematic view explaining one embodiment of the information display panel constituting a part of the information display system according to the invention.

[Fig. 3] Fig. 3 is a schematic view explaining another embodiment of the information display panel constituting a part of the information display system according to the invention.

[Fig. 4] Figs. 4a - 4c are schematic views explaining one preferred embodiment of the information display panel 9 having a construction shown in Fig. 2 or Fig. 3, which constitutes a part of the information display system according to the invention.

[Fig. 5] Fig. 5 is a schematic view explaining another preferred embodiment of the information display panel 9 having a construction shown in Fig. 2 or Fig. 3, which constitutes a part of the information display system according to the invention.

[Fig. 6] Fig. 6 is a schematic view explaining still another preferred embodiment of the information display panel 9 having a construction shown in Fig. 2 or Fig, 3, which constitutes a part of the information display system according to the invention.

[Fig. 7] Fig. 7 is a schematic view explaining still another preferred embodiment of the information display panel 9 having a construction shown in Fig. 3, which constitutes a part of the information display system according to the invention.

[Fig. 8] Figs. 8a and 8b are schematic views respectively explaining one embodiment of a TFT substrate constituting the drive device of the information display system according to the invention.

[Fig. 9] Fig. 9 is a schematic view explaining another embodiment of the TFT substrate constituting the drive device of the information display system according to the invention.

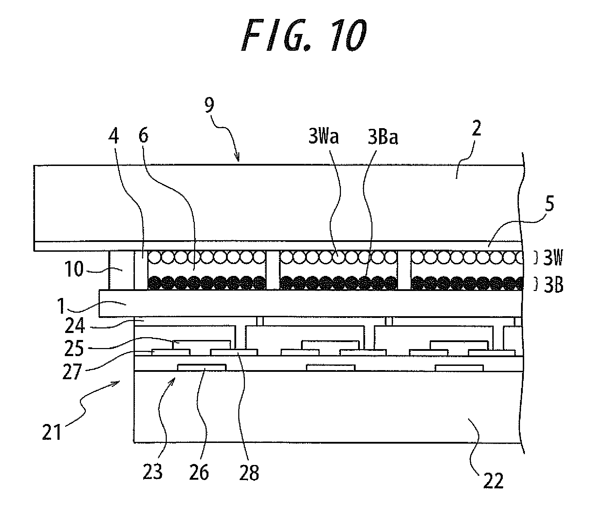

[Fig, 10] Fig. 10 is a schematic view explaining one embodiment of a method of displaying information on the information display panel by using the information display system according to the invention.

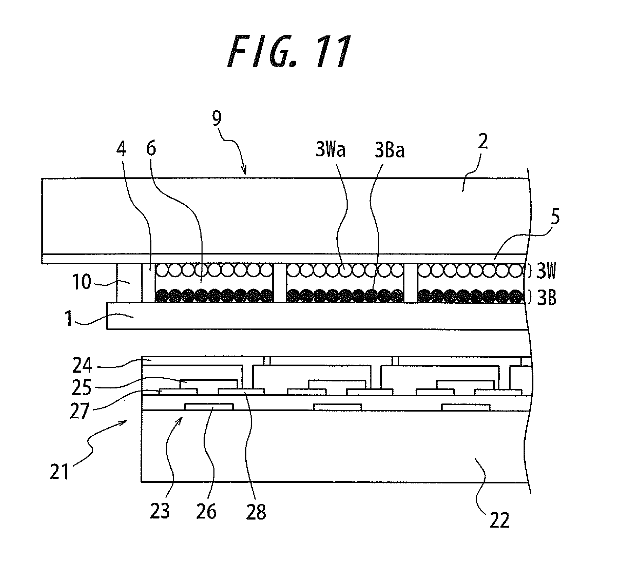

[Fig, 11] Fig. 11 is a schematic view explaining another embodiment of a method of displaying information on the information display panel by using the information display system according to the invention.

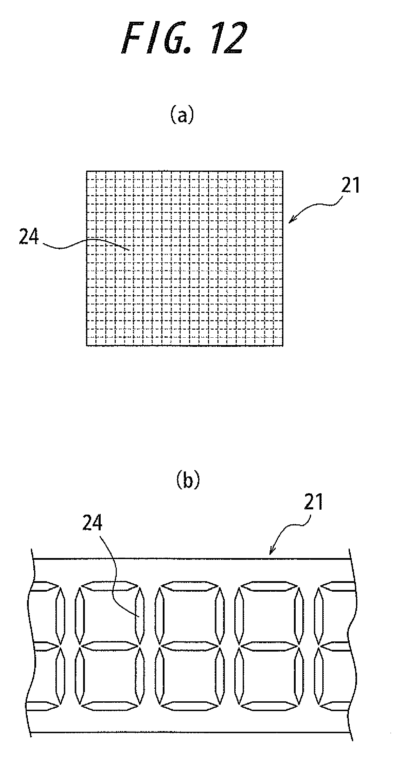

[Fig. 12] Figs, 12a and 12b are schematic views respectively explaining one arrangement of pixel electrodes on the TFT substrate constituting the drive device of the information display system according to the invention.

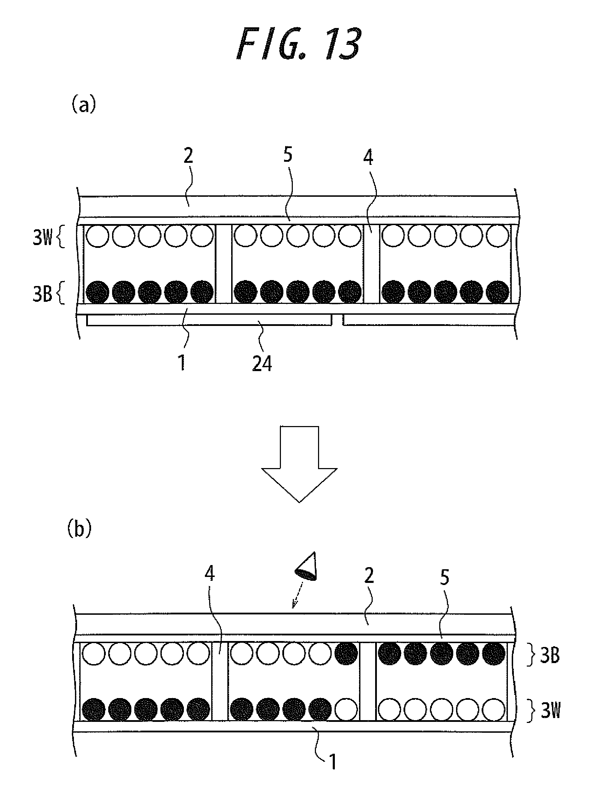

[Fig. 13] Figs. 13a and 13b are schematic views respectively explaining one embodiment of a drive of display media in the information display panel of the information display system according to the invention.

tion.

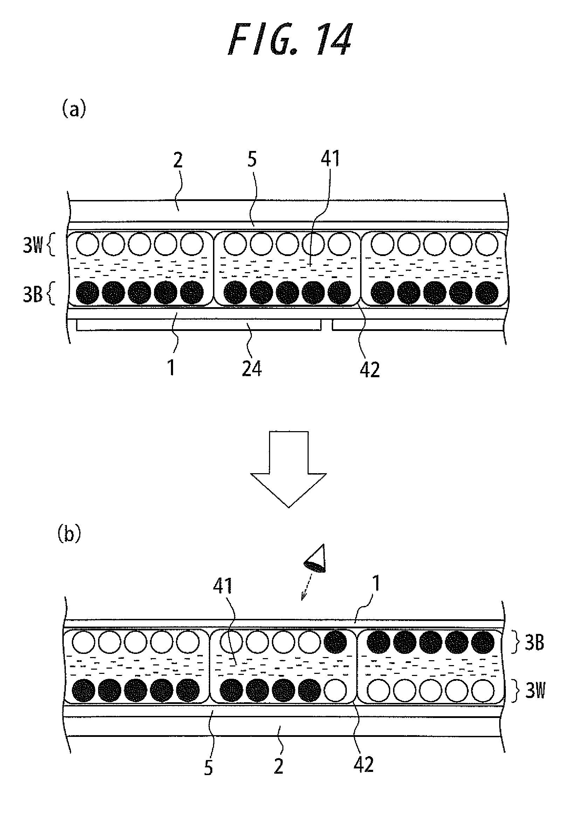

[Fig. 14] Figs. 14a and 14b are schematic views respectively explaining another embodiment of a drive of display media in the information display panel of the information display system according to the invention,

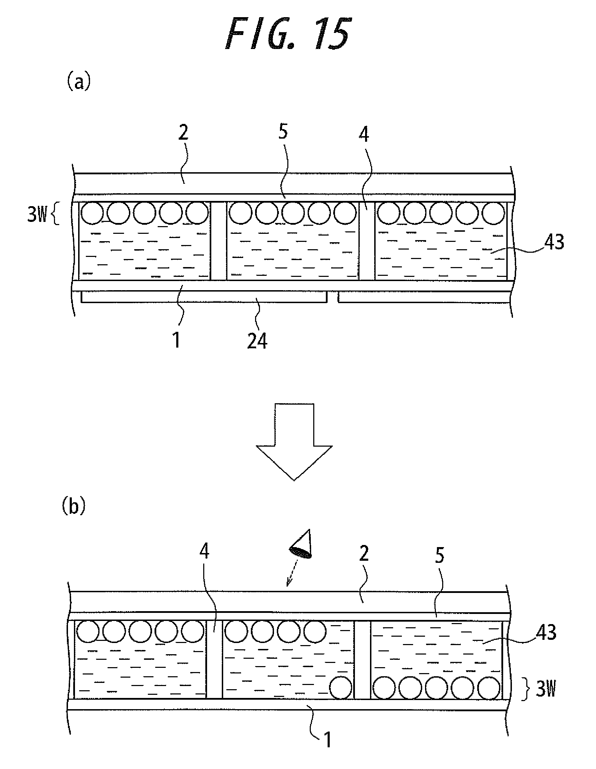

[Fig. 15] Figs. 15a and 15b are schematic views respectively explaining still another embodiment of a drive of display media in the information display panel of the information display system according to the invention.

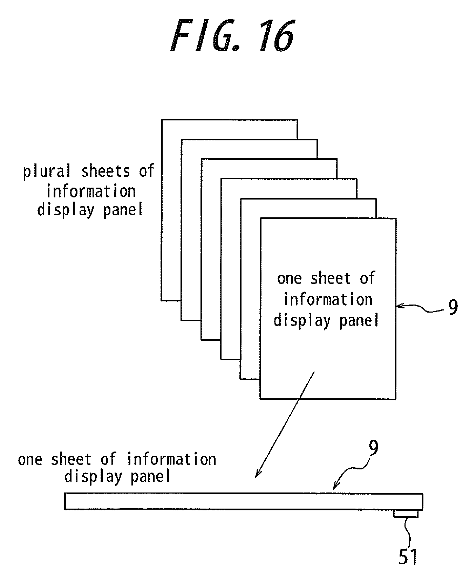

[Fig. 16] Fig, 16 is a schematic view showing one embodiment of the information display panel constituting a part of the information display system according to the invention.

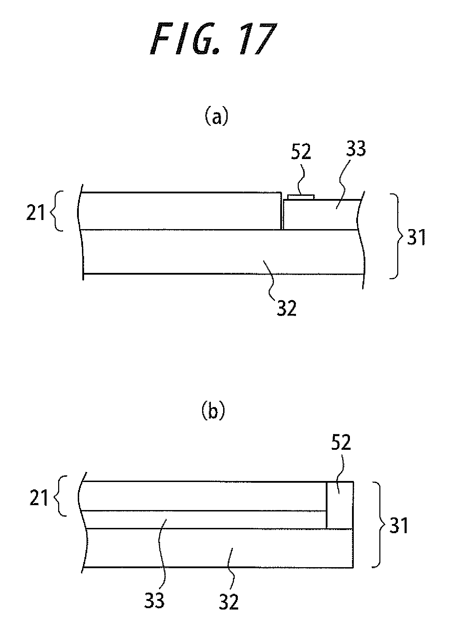

[Fig. 17] Figs. 17a and 17b are schematic views respectively illustrating one embodiment of the drive device constituting a part of the information display system according to the invention.

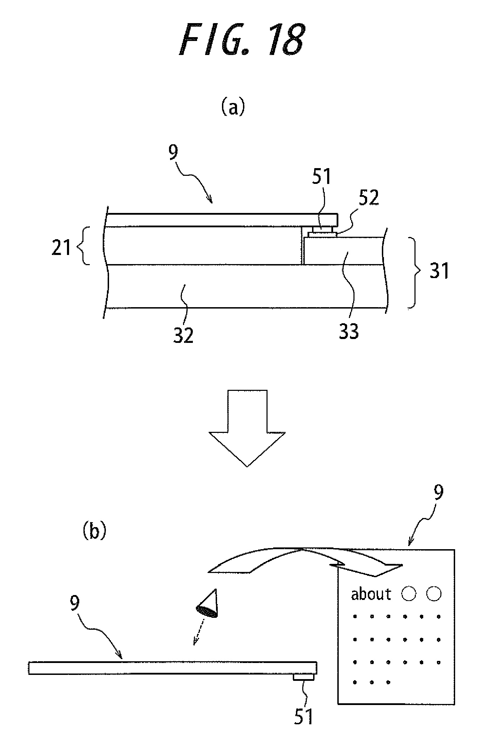

[Fig. 18] Fig. 18 is a schematic view depicting the information display method according to the invention.

## DESCRIPTION OF THE PREFERRED EMBODIMENTS

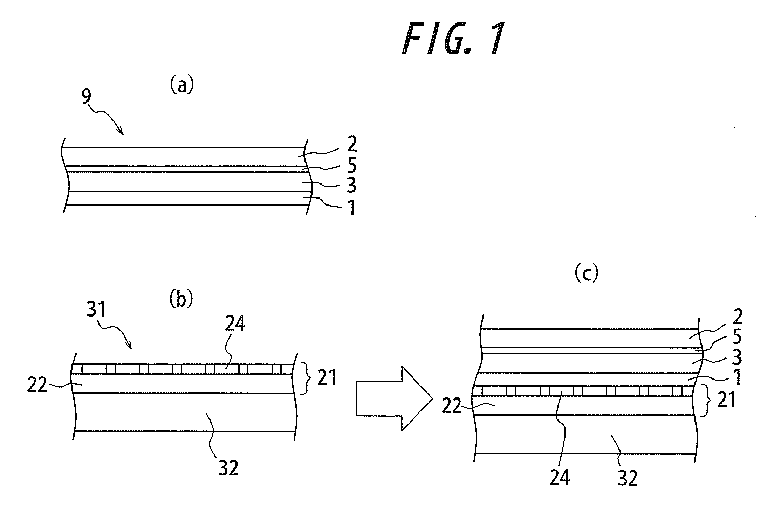

Figs. 1a - 1b are schematic views respectively explaining a concept of an information display system and an information display method according to the invention. The information display system according to the invention is constructed by the information display panel and the drive device. Here, Fig. 1a shows one embodiment of an information display panel 9, Fig. 1b illustrates one embodiment of a drive device 31, and Fig. 1c depicts one embodiment of a state when performing the information display method.

The information display panel 9 according to the invention shown in Fig. 1a is constructed by including a first panel substrate 2 on which a solid conductive film 5 is arranged in such a manner that a conductivity exists along a surface direction, a second panel substrate 1 formed by an insulation material, and a display media layer 3 arranged between the first panel substrate 2 and the second panel substrate 1, which displays information by moving in accordance with an applied electric field.

The drive device 31 according to the invention shown in Fig. 1b is constructed by forming a TFT substrate portion 21 on a drive device base 32. Moreover, the TFT substrate portion 21 is constructed by forming pixel electrodes with TFT 24 on a substrate 22.

And as shown in Fig. 1c, a surface at a side of the second panel substrate 1, which is a substrate made of an insulation material, in the information display panel 9 is disposed oppositely to a surface of the TFT substrate portion 21 of the drive device 31. In Fig. 1c, the surface at a side of the second panel substrate 1 is mounted on the surface of the TFT substrate.

In this case, a connection terminal of the solid conductive film 5 arranged on the first panel substrate 2 of the information display panel 9 is electrically connected to a connection terminal of the drive device 31. After that, by operating the drive device 31, information is displayed on the information display panel 9, or, information previously displayed on the information display panel 9 is deleted. If the first panel substrate 2 and the conductive film 5 are made to be transparent, information displayed on a side of the first panel substrate 2 may be observed from a side of the first panel substrate 2. Moreover, If the second panel substrate 1 is made to be transparent, information displayed on a side of the first panel substrate 1 may be observed from a side of the second panel substrate 1 after detaching the information display panel 9 from the drive device 31,

As the conductive film 5 having a conductivity along a surface direction, which is arranged on the first panel substrate 2 of the information display panel 9, use may be made of a conductive film in which stripe conductive films, net-like conductive films or dotted conductive films are electrically connected in a continuous manner other than a solid shape. In the case that the first panel substrate 2 is not made to a side of observation, the overall first panel substrate 2 may be formed by a substrate made of a conductive material, and an inner surface of the first panel substrate 2 may be constructed by the conductive film 5. In this case, an insulation film is disposed on an outer surface of the first panel electrode 2 not to get a shock during a performance of the system according to the invention.

The second panel substrate 1 of the information display panel 9 needs to have a construction such that there is no conductivity along a surface direction. For that purpose, overall of the panel substrate may be formed by an insulation material, or, a plurality of dot-shaped electrodes may be arranged independently on a surface of the substrate made of an insulation material in such a manner that the dot-shaped electrodes are not electrically conducted respectively, so that a construction such that there is no conductivity along a surface direction may be achieved.

In the present invention, the display media disposed between the first panel substrate 2 and the second panel electrode 1 of the information display panel 9 are moved between two panel substrates by an electric field generated between a pair of opposed electrodes formed in such a manner that the conductive film 5 having a conductivity along a surface direction and arranged on the first panel substrate 2 of the information display panel 9 and the pixel electrodes each having TFT 24 disposed on the TFT substrate portion 21 of the drive device 31 are opposed. Therefore, the conductive film 5 of the first panel substrate 2, which is one of the pair of opposed electrodes, needs to have a function as a common electrode due to a conductivity along a surface direction. Moreover, the second panel substrate 1 of the information display panel 9, which is sandwiched between the pair of opposed electrodes, does not shield an electric field generated between the pair of opposed electrodes by making it non-conductivity along a surface direction. In the case that the conductive films are partly arranged on the substrate, if the substrate is made of an insulation material and the conductive films are not electrically conducted with each other, the second panel substrate 1 of the information display panel 9 can achieve a construction having non-conductivity along a surface direction. In this case, the substrate does not shield an electric field, and thus the substrate does not become hindrance for information rewriting operation i.e. display media driving operation.

If the surface of the second panel substrate of the information display panel 9 is disposed oppositely to the surface of the TFT substrate of the drive device 31, it is no problem that they may be connected or they may be separated. It is preferred to contact overall surfaces as much as possible, but it is not necessary to connect the surfaces firmly. Of course, they may be attached firmly with each other. Moreover, if they are separated too much, there is a drawback such that a large electric field is necessary for driving the display media, and thus it is preferred to position them as close as possible.

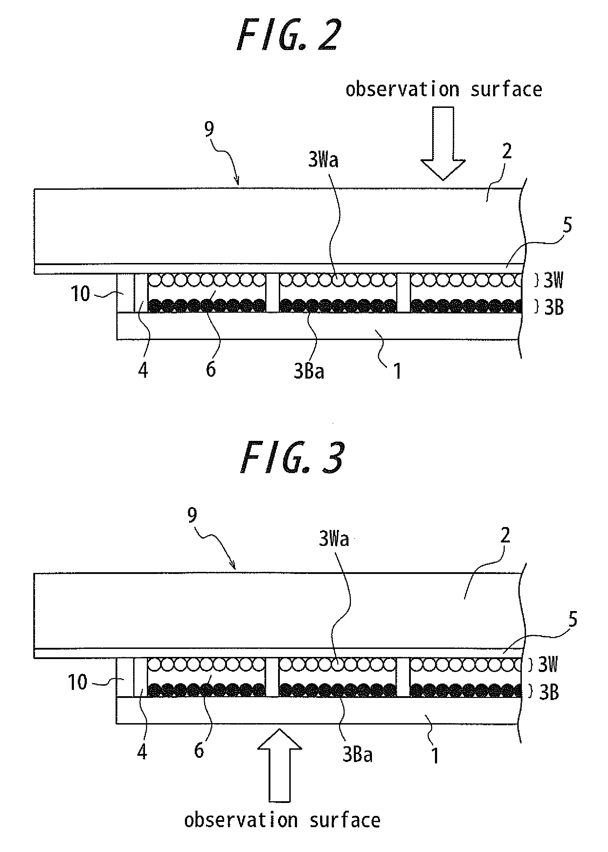

Fig. 2 to Fig. 7 are schematic views respectively explaining one embodiment of the information display panel constituting a part of the information display system according to the invention.

In the embodiment shown in Fig. 2, the information display panel 9 is disclosed. In the information display panel 9, white color display media 3W constituted by particles including a negatively chargeable white color particle 3Wa and black color display media 3B constituted by particles including a positively chargeable black color particle 3Ba are sealed in a cell formed by dividing an opposed space by means of partition walls 4, which is formed between the second panel substrate 1 opposed to the TFT substrate of the drive device and being rear side when observing and the first panel substrate 2 being transparent observation side and on which the solid transparent conductive film 5 is arranged. Moreover, the display media are moved perpendicularly to the panel substrates 1, 2 so as to display information in accordance with an electric filed generated by applying a voltage between the pixel electrodes of the TFT substrate of the drive device mentioned below which is disposed outside of the second panel substrate 1 and the solid transparent conductive film 5 of the transparent first panel substrate 2. A seal agent 10 is disposed at an outer peripheral portion between two panel substrates of the information display panel, and an intrusion of moisture from the outside portion into the panel space, in which the display media are disposed, can be inhibited. Moreover, in this case, the space between two panel substrates are divided finely by the partition walls, but the partition wall may be arranged only at the outermost peripheral portion and an inner space surrounded by the partition wall may not be divided finely.

In the embodiment shown in Fig. 2, a thickness of the second panel substrate 1 to be opposed to the TFT substrate of the drive device mentioned below is thinner than that of the transparent first panel substrate 2 on which the solid transparent conductive film 5 . Moreover, as a material of the second panel substrate 1, use is made of an insulation material such as polyethylene terephthalate (PET), polyethylene naphthalate (PEN), and so on. In this case, opaque substrate may be used. As the solid transparent conductive film 5, use is made of transparent conductive metal oxides such as indium tin oxide (ITO), indium oxide, zinc-doped indium oxide (IZO), aluminum-doped zinc oxide (AZO), conductive tin oxide, antimony tin oxide (ATO), conductive tin oxide, conductive zinc oxide and so on, or, transparent conductive polymers such as polyaniline, polypyrrole, polythiophene, poly (3,4-ethylenedioxythiophene) - poly - (styrenesulfonate) (PEDOT:PSS) and so on. As the transparent panel substrate 2, use is made of a transparent sheet made of resin such as polyethylene terephthalate (PET), polyethylene naphthalate (PEN), polyethylene (PE), polycarbonate (PC), polyimide (PI), polyether sulfone (PES) or a glass,

In the information display panel 9 shown in Fig. 2, the solid transparent conductive film 5 arranged on the first panel substrate 2 at the observation side is used as an electrode for forming an electric filed. Since the solid conductive film is used, it is not necessary to perform a patterning of the electrode. Moreover, if IC for driving is installed in the drive device and not in the information display panel, it is possible to manufacture extremely inexpensive information display panel 9. Further, since an electrical connection between the solid conductive film and overall screen region of the first panel substrate 2 can be performed if an electrical connection is performed at one point of the solid conductive film, the electrical connection between the drive device side and the information display panel side can be performed easily. Furthermore, the insulation second panel substrate 1 at a rear side when observing, which is opposed to the drive device, is constructed to be made thin. For example, if a thickness is set to 25 $\mu$m - 100 $\mu$m, an electric field generated by applying a voltage between the pixel electrodes of the drive device and the solid conductive film 5 can be effectively applied to the display media.

In the embodiment shown in Fig. 3, the information display panel 9 is disclosed. In the information display panel 9, white color display media 3W constituted by particles including a negatively chargeable white color particle 3Wa and black color display media 3B constituted by particles including a positively chargeable black color particle 3Ba are sealed in a cell formed by dividing an opposed space by means of partition walls 4, which is formed between the transparent second panel substrate 1 opposed to the TFT substrate of the drive device and being observation side when observing and the first panel substrate 2 being rear side and on which the solid transparent conductive film 5 is arranged. Moreover, the display media are moved perpendicularly to the panel substrates 1, 2 so as to display information in accordance with an electric filed generated by applying a voltage between the pixel electrodes of the TFT substrate of the drive device mentioned below which is disposed outside of the transparent second panel substrate 1 being observation side and the solid conductive film 5 of the first panel substrate 2. A seal agent 10 is disposed at an outer peripheral portion between two panel substrates of the information display panel, and an intrusion of moisture from the outside portion into the panel space, in which the display media are disposed, can be inhibited. Moreover, in this case, the space between two panel substrates are divided finely by the partition walls, but the partition wall may be arranged only at the outermost peripheral portion and an inner space surrounded by the partition wall may not be divided finely.

In the embodiment shown in Fig. 3, a thickness of the insulation transparent second panel substrate 1 being observation side to be opposed to the TFT substrate of the drive device mentioned below is thinner than that of the first panel substrate 2 being rear side on which the solid transparent conductive film 5 . As the first panel substrate 2 being rear side, use is made of a transparent sheet made of resin such as polyethylene terephthalate (PET), polyethylene naphthalate (PEN), polycarbonate (PC), polymethylmethacrylate (PMMA), polyether sulfone (PES) or a glass as well as a sheet made of opaque material such as glass fiber reinforced epoxy resin and so on. As the solid transparent conductive film 5, use is made of transparent conductive metal oxides such as indium tin oxide (ITO), indium oxide, zinc-doped indium oxide (IZO), aluminum-doped zinc oxide (AZO), antimony tin oxide (ATO), conductive tin oxide, conductive zinc oxide and so on, or, transparent conductive polymers such as polyaniline, polypyrrole, polythiophene, poly (3,4-ethylenedioxythiophene) - poly - (styrenesulfonate) (PEDOT:PSS) and so on as well as a metals such as gold, silver, aluminum, copper, nickel, chromium and their alloys including those metal as an main ingredient. As the insulation transparent second panel substrate 1, use is made of a transparent sheet made of resin such as polyethylene terephthalate (PET), polyethylene naphthalate (PEN), polycarbonate (PC), polymethylmethacrylate (PMMA), polyether sulfone (PES) or a glass and so on.

In the information display panel 9 shown in Fig. 3, the solid conductive film 5 arranged on the first panel substrate 2 at the rear side when observing is used as an electrode for forming an electric filed. Since the solid conductive film is used, it is not necessary to perform a patterning of the electrode. Moreover, if IC for driving is installed in the drive device and not in the information display panel, it is possible to manufacture extremely inexpensive information display panel 9. Further, since an electrical connection between the solid conductive film and overall screen region of the first panel substrate 2 can be performed if an electrical connection is performed at one point of the solid conductive film, the electrical connection between the drive device side and the information display panel side can be performed easily. Furthermore, the insulation transparent second panel substrate 1 at a rear side when observing, which is opposed to the drive device, is constructed to be made thin. For example, if a thickness is set to 25 $\mu$m - 100 $\mu$m, an electric field generated by applying a voltage between the pixel electrodes of the drive device and the solid conductive film 5 can be effectively applied to the display media.

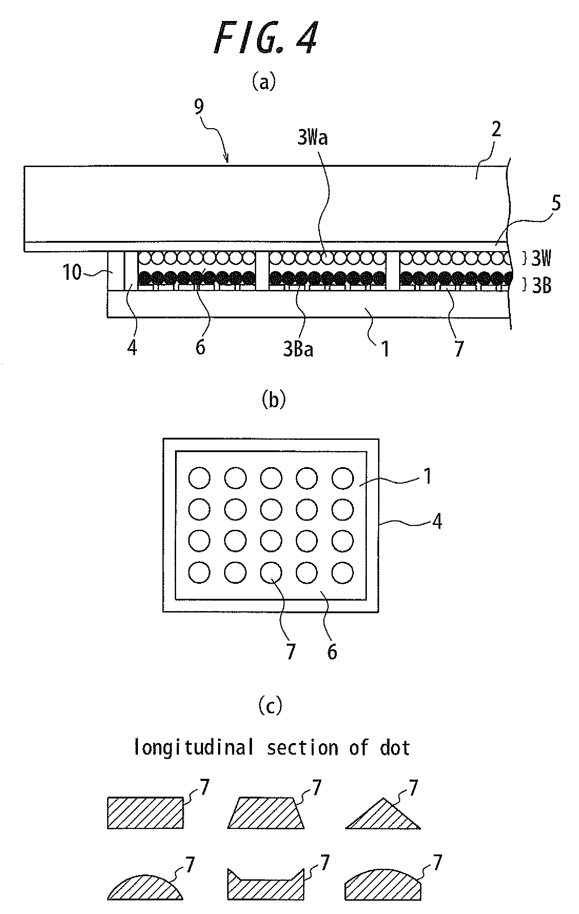

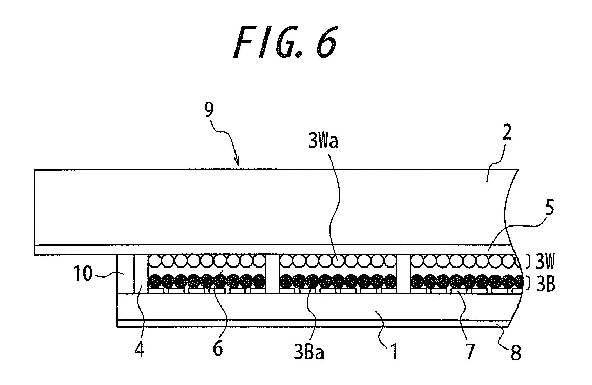

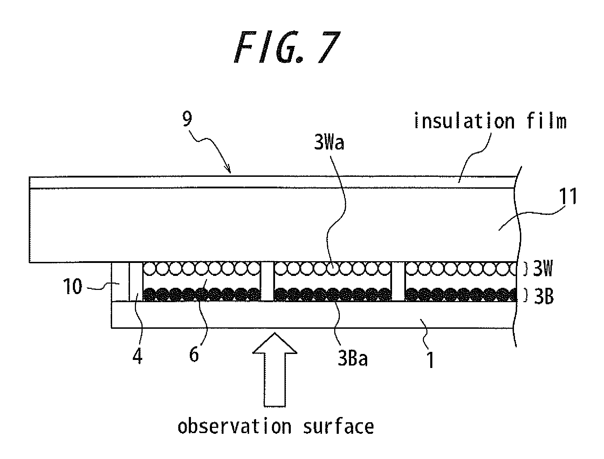

Fig. 4 to Fig. 7 are schematic views respectively explaining a preferred embodiment of the information display panel 9 constituting a part of the information display system according to the invention. Among the embodiments shown in Figs. 4 - 7, in the embodiments shown in Figs. 4 - 6, regarding the insulation second panel substrate 1 opposed to the pixel electrodes of the TFT substrate at the drive device side and the first panel substrate 2 of the information display panel, whichever may be transparent. That is, one of them may be the panel substrate at the rear side and the other may be the panel substrate at the observation side. In this case, the panel substrate at the observation side when observing the displayed information should be made transparent. In this regard, in the embodiment shown in Fig. 6, dot electrodes 7 and a antistatic layer 8 are arranged on the second panel substrate 1 and the second panel substrate 1 has less transparency. Therefore, this embodiment is limited to the construction shown in Fig. 2 in which the first panel substrate 2 becomes the observation side. Moreover, in the embodiment shown in Fig. 7, the first panel substrate 11 is made of the insulation material and is the opaque substrate such as a copper plate. Therefore, this embodiment is limited to the construction shown in Fig. 3 in which the second panel substrate 1 is transparent.

In the embodiments shown in Figs. 4a to 4c, the dot electrodes 7 are arranged on an inner surface of the insulation second panel substrate 1 of the information display panel 9, which is opposed to the pixel electrodes of the drive device mentioned below. In the embodiments shown in Figs. 4a to 4c, in addition to the effects obtained from the embodiments shown in Figs. 2 and 3, since the dot electrodes 7 are arranged, it is possible to keep the display media on the second panel substrate 1 effectively after information is displayed, and thus the displayed information can be maintained effectively. In contrast, since the dot electrodes are not conductive along a surface direction when rewriting the displayer information, the dot electrode does not inhibit an electric field acting to the information display panel 9 and thus the displayer information can be rewritten effectively. Fig. 4b shows a plan view of the dot electrodes 7 in one cell 6, so that the dot electrodes 7 can be understood easily. Here, the dot electrode 7 has a cylindrical shape, but the plan view of the dot electrode 7 is not limited to a circular shape and use may be made of other shape such as triangular shape, square shape, hexagonal shape, and so on. Further, it is not necessary to make a top surface of the dot electrode 7 flat, but the top surface may be acicular shape. Moreover, the dot electrodes 7 are not connected with each other and are not electrically connected along a surface direction.

The dot electrodes 7 shown in Figs. 4a to 4c are arranged on the second panel substrate 1 of the information display panel 9, and thus there is an effect such that the display media are easily moved with respect to an electric filed generate between the pair electrodes. The reason of this effect is not unexplained, but it is estimated that a rectification property along an electric field direction, in which the display media are moved perpendicularly to a surface of the panel substrates, is obtained easily by making the panel substrate non-conductive along a surface direction.

Moreover, since the dot electrodes having a longitudinal section shown in Fig. 4c are disposed on a surface of the substrate, a contacting state between the particles and the substrate surface becomes difficult to be bonded with each other, and thus an effect of easily moving the particles, to which an electric field is applied, can be also obtained.

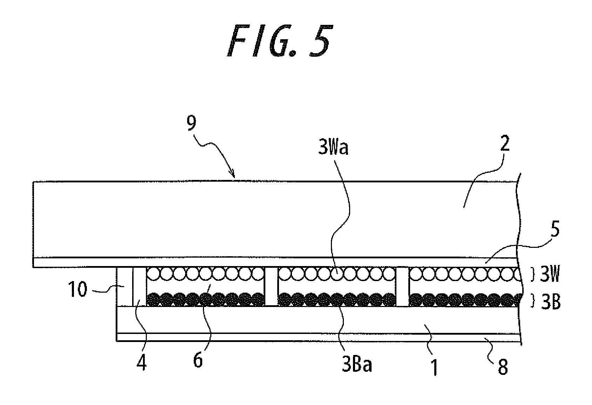

In the embodiment shown in Fig. 5, a conductive film having a surface resistivity of $1.0 \times 10^5 \Omega$/sq. - $1.0 \times 10^{12} \Omega$/sq. is arranged on an outer surface of the insulation second panel substrate 1 of the information display panel, which is opposed to the pixel electrodes of the TFT substrate of the drive device mentioned below, as the antistatic layer 8. In the embodiment shown in Fig. 5, in addition to the effects obtained from the embodiments shown in Figs. 2 and 3, since the antistatic layer 8 is arranged, even when an electrical disturbance is applied to the information display panel after information is displayed, it is possible to eliminate an influence of the electrical disturbance and to maintain the displayed information stably. As the antistatic layer 8, use is made of a transparent film formed by applying transparent conductive polymer such as polythiophene, poly (3,4-ethylenedioxythiophene) / poly - (styrenesulfonate) (PEDOT-PSS), and, a transparent film constructed by dispersing particles of transparent conductive oxide such as ITO and $SnO_2$ into a resin binder. In the case that the antistatic layer is arranged to the transparent panel substrate of the information display panel being the observation side, it is necessary to arrange the transparent antistatic layer 8. In the case that the antistatic layer is arranged to the panel substrate of the information display panel being the rear side, it is not necessary to arrange the transparent antistatic layer 8.

The film of the antistatic layer 8 having a surface resistivity of $1.0 \times 10^5 \Omega$/sq. - $1.0 \times 10^{12} \Omega$/sq. is disposed in such a manner that it covers an overall outer surface of the second panel substrate 1 of the information display panel 9 or that it covers outer surface of the second panel substrate 1 discontinuously so as to reduce a conductivity along a surface direction. In this case, if the film is formed by an island structure, it is not sufficient to perform an antistatic property, but if the film is formed by a stripe structure, it is not necessary to form the film as an overall coating. The stripe structure can obtain a sufficient antistatic property.

If a surface resistivity is not larger than $1.0 \times 10^5 \Omega$/sq. i.e. a surface resistivity is larger, there is a drawback such that the overall second panel substrate does not become the insulation substrate. If a surface resistivity is not less than $1.4 \times 14^{12}\Omega$/sq., there is a drawback such that an antistatic property can not be obtained.

The surface resistivity is measured by using a method called as a double ring electrode method. In the double ring electrode method, double ring electrodes (diameter of inner electrode: 16mm $\phi$, inner diameter of outer electrode: 30mm $\phi$, outer diameter of outer electrode: 40mm $\phi$) are used, and a surface resistivity is measured under a condition of load: 5N and applied voltage 10V. As the measuring instrument, use is made of a surface resistance measuring device "Megaresta Model HT-301" manufacture by SHISHIDO

ELECTROSTATIC, LTD.

In the embodiment shown in Fig. 6, the dot electrodes 7 shown in Fig. 4 and the antistatic layer 8 shown in Fig. 5 are respectively arranged on an inner surface and an outer surface of the insulation second panel substrate 1 of the information display panel 9. In the embodiment shown in Fig. 6, in addition to the effects obtained from the embodiments shown in Figs. 2 and 3, the effect of the dot electrode 7 shown in Fig. 7 and the effect of the antistatic layer 8 shown in Fig. 5 can be obtained.

Fig. 7 shows a preferred embodiment in the case that the first panel substrate shown in Fig. 3 becomes a rear side when observing and does not need a transparency. In the embodiment shown in Fig. 7, instead of the first panel substrate 1 and the solid conductive film 5 shown in Fig. 3, a substrate made of a conductive material is used and the first panel substrate 11 having conductivity along a surface direction is achieved. The substrate material is not limited if it has a conductivity, but it is preferred that use is made of a material having a low electrical resistivity i.e. a material having a high conductivity. As the conductive material, it is preferred to use a metal as mentioned above, In this embodiment, in addition to the effects obtained from the embodiment shown in Fig. 3, it is possible to obtain the first panel substrate 2 having conductivity along a surface direction easily and inexpensively. In this case, since a voltage is applied to an inner surface of the first panel substrate 2 (here, substrate made of conductive material 11) when rewriting information, it is preferred to coat an insulation film on an outer surface of the first panel substrate 2 (here, substrate made of conductive material 11) because there is no danger even if a human hand is contacted with the first panel substrate.

In the embodiments mentioned above, use is made of the positively chargeable black color display media 3B and the negatively chargeable white color display media 3 W as the display media, but use may be made of the display media having other colors, Moreover, as the display media used in the information display panel according to the invention, use is made of various types of display media, if the display media are driven by an electric filed and have a display memory property such that the displayed image can be maintained even when the power is made OFF, As the display media, use is made of the particles including the chargeable particle mentioned above which can be driven in an aerial space, while use is made of the particles including the chargeable particle which can be driven in an insulation liquid (an electrophoresis of micro capsule type is know), the circular particles constructed by two colors at half and half and having different chargeable properties which can be driven by rotating them in the micro capsule (twist ball method) or a cholesteric liquid crystal. Among them, it is preferred to use the particles, which can be driven in the aerial space, including a chargeable particle having a fast drive response rate and an excellent display memory property.

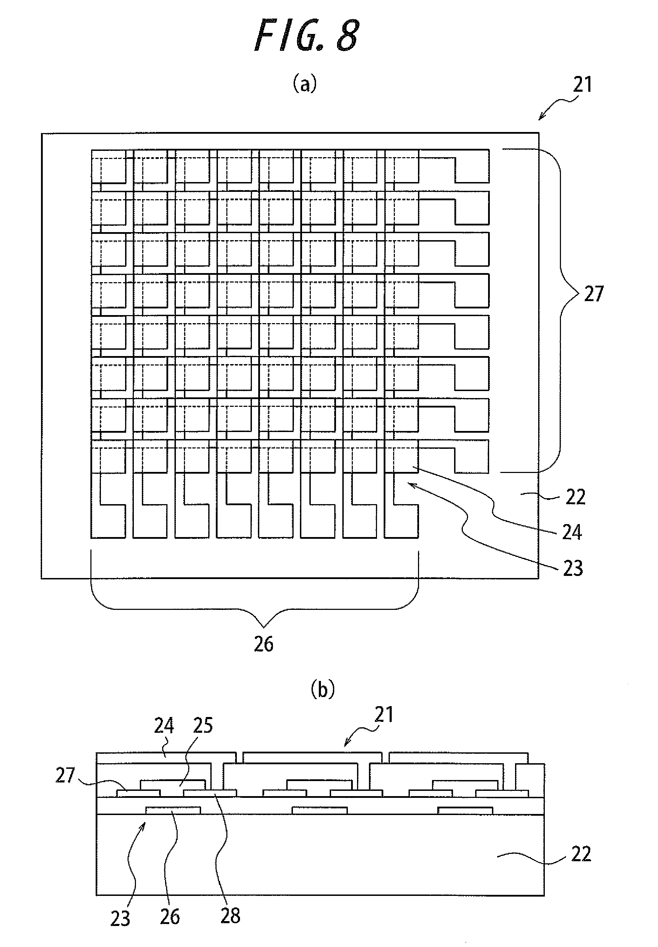

Figs. 8a and 8b are schematic views respectively explaining one embodiment of the TFT substrate installed in the drive device constituting a part of the information display device according to the invention. In the embodiments shown in Figs. 8a and 8b, Fig. 8a shows a plan view of a TFT substrate portion of the drive device and Fig. 8b illustrates a partial cross sectional view thereof. For the sake of making explanation simple, the construction of the plan view shown in Fig. 8a and the construction of the cross sectional view shown in Fig. 8b are not necessarily identical with each other. The construction of the TFT substrate portion is not limited to the embodiment shown in Figs. 8a and 8b, but use may be made of prior various constructions known as the TFT substrate.

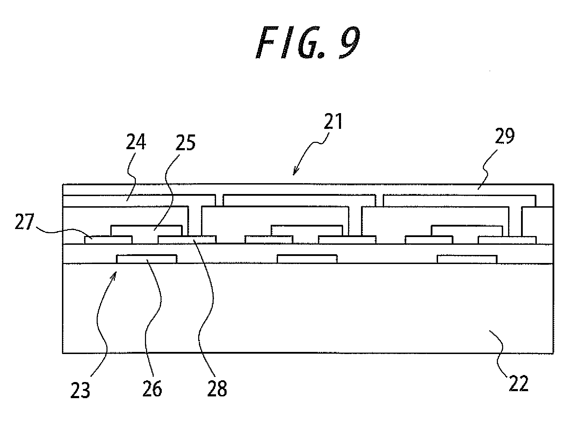

In the embodiment shown in Figs. 8a and 8b, a TFT substrate portion 21 is formed by the TFT substrate in which TFT circuits 23 for an active matrix drive and pixel electrodes 24 connected to respective TFT circuits 23 are arranged on a substrate 22. The TFT circuit 23 has a structure in which, with respect to semiconductor layers 25 arranged respectively according to the pixel electrodes 24 disposed in a matrix manner, a gate electrode 26 and a source electrode 27 are arranged orthogonally and a drain electrode 28 is arranged. The drain electrodes 28 are respectively connected to the pixel electrodes 24. ON/OFF operation of a voltage applied to the pixel electrode 24 is controlled by a switching function of the TFT circuit 23. In the embodiment shown in Fig. 8, the pixel electrodes 24 are exposed, but as shown in Fig. 9 illustrating a variation of the TFT substrate portion 21 of the drive device, a film having a surface resistivity of not less than $1.0 \times 10^5 \Omega$/sq. may be arranged on the pixel electrodes 24 as a protection layer 29. This protection film should have an insulation property, it is necessary to set a surface resistivity of the protection film to not less than $1.0 \times 10^5 \Omega$/sq.

Although the protection film 29 may not exist, it is preferred to arrange the protection film 29, since the protection film 29 can prevent a mechanical damage with respect to the pixel electrodes when the information display panel is detached and since the protection film 29 can prevent a break even if the pixel electrodes of the TFT substrate are damaged.

Moreover, in the case such that conductive foreign substances are sandwiched between the pixel electrodes when the information display panel is detached, if the protection film is not existent, an electrical short-circuit occurs between the pixel electrodes of TFT and thus there is a possibility such that the displayed information is damaged. In this case, if the protection film exists, short-circuit between the pixel electrodes is free from worry.

Fig. 10 is a schematic view explaining one embodiment of a method of displaying information on the information display panel by using the information display system according to the invention. In the embodiment shown in Fig. 10, a feature of the method of displaying information on the information display panel by using the information display system according to the invention is that information is rewritten in such a manner that a surface of the TFT substrate portion 21 of the drive device is disposed oppositely in contact with the insulation second panel substrate 1 of the information display panel opposed to the pixel electrodes 24 of the TFT substrate portion 21 of the drive device. If a surface of the second panel substrate 1 and a surface of the TFT substrate are contacted, it is not necessary to firmly connect them. Of course, they may be firmly connected,

One example of a method of rewriting the displayed information is as follows. At first, all the TFT circuits 23 of the TFT substrate portion 21 of the drive device are turned ON, and a deleting operation, in which an overall information display screen of the information display panel is displayed by a black color or a white color, is performed by means of an electric field generated by applying a voltage between all the pixel electrodes 24 of the TFT substrate portion 21 of the drive device and the solid conductive film 5 of the information display panel 9. Then, information is displayed on the first panel substrate 2 or the second panel substrate 1 of the information display panel 9 by means of an electric field generated by applying a voltage partially between the pixel electrodes 24 of the TFT substrate portion 21 of the drive device and the solid conductive film 5 of the information display panel 9, in such a manner that respective TFT circuits 23 of the TFT substrate portion 21 of the drive device is turned to be ON state or OFF state in accordance with information to be displayed. After that, if the information display panel 9 is detached from the TFT substrate portion 21 of the drive device, information displayed on the information display panel 9 can be maintained without vanishing due to its memory property, and thus the displayed information can be viewed by a viewer if a viewer observes the transparent panel substrate of the information display panel.

Since a case in which the first panel substrate 2 becomes the observation side and a case in which the second panel substrate 1 becomes the observation side are just a negative/positive relation, it is necessary to move the display media based on the observation side. In Fig. 10, if the first panel substrate 2 is made to be transparent and becomes the observation side, it is possible to view the rewritten information by means of the display media driving while the information display panel is attached to the drive device.

According to the method of displaying information on the information display panel by using the information display system according to the invention, it is possible to display information on the information display panel, in which an electrode patterning is not performed and IC for driving is not installed, by using the drive device having a thin and compact construction. That is to say, in the information display system according to the invention, it is possible to display information with respect to the thin-type information display panel by using the thin and compact drive device. In addition, since the display information on the information display panel can be maintained at it is even if a power is turned OFF, it is possible to detach the information display panel from the drive device and to take the information display panel anywhere. When information is displayed on the information display panel, a surface of the second panel substrate of the information display panel, on which the electrode is not formed, is disposed oppositely with respect to the TFT substrate of the drive device, and the connection terminal of the information display pane is electrically connected to the connection terminal of the drive device, thereby applying a voltage controlled by the IC for driving between the pixel electrode pairs. The displayed information may be viewed under a state such that the information display panel is attached to the drive device, or may be viewed under a state such that the information display panel is detached from the drive device. Various viewing conditions can be realized. Moreover, in the information display system according to the invention, since the information display system can be constructed by the thin and compact drive device and the thin and light information display panel, it is possible to bring overall information display system anywhere. Further, in the information display panel, since use is made of the solid conductive film arranged on one panel substrate or the substrate made of conductive material such as a metal plate, it is not necessary to perform the patterning of the conductive film and to install the IC for driving, and thus it is possible to manufacture the information display panel in an extremely inexpensive manner. Furthermore, since an electrical connection between the information display panel and the drive device can be performed if an electrical connection is performed at one point of the solid conductive film or the substrate made of conductive material, a circuit structure can be made easy.

In the embodiment shown in Fig. 10, the displayed information is rewritten under a condition such that a surface of the TFT substrate portion 21 of the drive device and the insulation second panel substrate 1 of the information display panel 9 opposed to the pixel electrodes 24 of the TFT substrate portion 21 of the drive device are disposed oppositely in a contact manner. However, it is sufficient to dispose a surface of the TFT substrate and the second panel substrate 1 in an opposite manner, and thus, as shown in Fig. 11, a surface of the TFT substrate and the second panel substrate 1 may be slightly separated.

Figs. 12a and 12b are schematic views respectively explaining one arrangement of the pixel electrodes on the TFT substrate constituting the drive device of the information display system according to the invention. In the embodiment shown in Fig. 12a, the pixel electrodes with TFT 24 respectively made of a dot electrode are arranged in a matrix manner. In the embodiment shown in Fig. 12b, the pixel electrodes with TFT 24 respectively made of an independent electrode are arranged in a segment manner.

Figs. 13a - 13b, Figs. 14a - 14b, and, Figs. 15a - 15b are schematic views respectively explaining one embodiment of a drive of display media in the information display panel of the information display system according to the invention. In the embodiment shown in Figs. 13a and 13b, the information display panel 9 having a construction such that two groups of display media constituted as particles including a chargeable particle (positively chargeable black color display media 3B and negatively chargeable white color display media 3 W) are sandwiched between two panel substrates 1 and 2 is disclosed.

In the information display panel 9 shown in Fig. 13a, an electric field is applied between the panel substrates 1 and 2 by applying a voltage between the conductive film 5 and the pixel electrodes with TFT 24, and the display media are driven. As a result, as shown in Fig. 13b, the displayed information can be viewed from a side of the transparent first panel substrate 2. In the embodiment shown in Figs. 14a and 14b, the information display panel 9 having a construction such that a micro capsule 42, in which two groups of display media constituted as particles including a chargeable particle (positively chargeable black color display media 3B and negatively chargeable white color display media 3W) are sealed with a transparent insulation solvent 41, is sandwiched between two panel substrates 1 and 2 is disclosed. In the information display panel 9 shown in Fig. 14a, an electric field is applied between the panel substrates 1 and 2 by applying a voltage between the conductive film 5 and the pixel electrodes with TFT 24, and the display media are driven. As a result, as shown in Fig. 14b, the displayed information can be viewed from a side of the transparent second panel substrate 1. In the embodiment shown in Figs. 15a and 15b, the information display panel 9 having a construction such that one group of display media constituted as particles including a chargeable particle (negatively chargeable white color display media 3W) are sealed in a cell 6 formed by the partition walls 4 with a colored insulation solvent 43 and are sandwiched between two panel substrates 1 and 2 is disclosed. In the information display panel 9 shown in Fig. 15a, an electric field is applied between the panel substrates 1 and 2 by applying a voltage between the conductive film 5 and the pixel electrodes with TFT 24, and the display media are driven. As a result, as shown in Fig. 15b, the displayed information can be viewed from a side of the transparent first panel substrate 2.

In the embodiments mentioned above, the explanation is made to the information display panel in which the chargeable particles are used as the display media. However, as the display media used in the information display panel constituting the information display system according to the invention, use may be made of display media if the information display panel has a memory property such that the displayed information can be maintained when the power is turned OFF, and thus cholesteric liquid crystal may be used other than the chargeable particles.

Then, another features of the information display system according to the invention are explained with reference to the information display panel shown in Fig. 16, the drive device shown in Figs. 17a and 17b, and, the method of using the information display system shown in Figs. 18a and 18b. In this embodiment, as shown in Fig. 16, a connection terminal 15 connected to the solid conductive film 5, which is used to be connected with the drive circuit, is formed on a plurality of information display panels 9 respectively. Moreover, in a drive device 31 shown in Fig. 17a, the TFT substrate portion 21 and a drive circuit 33 are disposed side by side (right and left) on a drive device base 32, and a connection terminal 52 used for connecting the information display panel is arranged on the drive circuit 33. In the drive device 31 shown in Fig. 17b, the drive circuit 33 and the TFT substrate portion 21 are disposed side by side (up and down) on a drive device base 32, and the connection terminal 52 used for connecting the information display panel is arranged side by side (right and left) with respect to the drive circuit 33 and the TFT substrate portion 21 disposed side by side (up and down). Moreover, in the method of using the information display system according to the invention, as shown in Fig. 18a, the information display panel 9 is set to a surface of the TFT substrate portion 21 in an opposite manner under a condition such that the connection terminal 51 of the information display panel 9 and the connection terminal 52 of the drive device 33 are contacted with each other. Then, a rewriting operation of the displayed information is performed by applying a voltage between the conductive film 5 and the pixel electrodes 24 from the drive circuit 33. After that, as shown in Fig. 18b, the information display panel 9 is detached from the TFT substrate portion 21, and information displayed on the information display panel can be viewed.

In this case, it is preferred to align the TFT substrate of the drive device and the information display panel, and thus a use of an alignment mark and a use of an alignment guide structure are preferred.

If a plurality of information display panels 9 have the same construction respectively on the basis of a specification corresponding to the drive device 31, a second information panel 9 may be set to the drive device 31 so as to display information, after a first information display panel 9 is set to the drive device 31 so as to display information and is detached from the drive device 31. The displayed information of the first information display panel 9 and the displayed information of the second information display panel 9 may be same or different. Since the displayed information on the information display panel 9 can be maintained without a power supply, a plurality of information display panels 9, on which necessary information is displayed by repeating the setting and detaching operations mentioned above, can be preserved until a next rewriting operation under a condition such that the displayed information is maintained as it is.

Hereinafter, respective members of the information display panel constituting the information display system according to the invention will be explained. Respective members constituting the information display panel are partly described in the previous embodiments, and thus they are partly overlapped.

As to the first panel substrate 2 which is not opposed to the TFT substrate of the drive device, any materials mentioned above can be used if a surface thereof has conductivity along a surface direction. In the case that the first panel substrate is arranged at observation side, the member having conductivity along a surface direction and the substrate are made to be transparent. As the second panel substrate 1 which is opposed to the TFT substrate of the drive device, use is made of an insulation material mentioned above having no-conductivity along a surface direction. In the case that the second panel substrate 1 is arranged at observation side, the member having no-conductivity along a surface direction and the substrate are made to be transparent.

As the panel substrate, at least one of the substrates is the transparent substrate through which a color of the display media can be observed from outside of the panel, and it is preferred to use a material having a high transmission factor of visible light and an excellent heat resistance. The other substrate may be transparent or may be opaque. Examples of the substrate material include polymer sheets such as polyethylene terephthalate (PET), polyethylene naphthalate (PEN), polyethylene (PE), polycarbonate (PC), polyimide (PI), polyether sulfone (PES) or acryl and a glass sheet, a quartz sheet or a metal sheet, The thickness of the first panel substrate is preferably 2 to 2000 $\mu$m, more preferably 5 to 1000 $\mu$m. When the thickness is too thin, it becomes difficult to maintain strength and distance uniformity between the substrates, and when the thickness is thicker than 2000 $\mu$m, there is a drawback as a thin-type information display panel.

It is preferred to make thin the second panel substrate 1, which is opposed to the TFT substrate of the drive device, and a thickness thereof is set to a range of 25 $\mu$m - 100 $\mu$m. In this embodiment, the display media are driven between the pair of opposed electrodes constructed by the conductive film arranged on the first panel substrate 2 of the information display panel 9 and the pixel electrodes with TFT arranged on the TFT substrate 21 of the drive device 31, under a condition that the second panel substrate 1 is disposed thereto. Therefore, if a thickness of the second panel substrate 1 exceeds 100 $\mu$m, there is a drawback that it is difficult to drive the display media by an electric field generated between the pair electrodes. Moreover, if a thickness is less than 25 $\mu$m, there is a drawback that a handling during the manufacture of the information display panel 9 is not easy.

As a material of the electrode and the conductive layer arranged according to need, use is made of metals such as aluminum, silver, nickel, copper, gold, or, conductive metal oxides such as indium tin oxide (ITO), zinc-doped indium oxide (IZO), aluminum-doped zinc oxide (AZO), indium oxide, conductive tin oxide, antimony tin oxide (ATO), conductive zinc oxide and so on, or, conductive polymers such as polyaniline, polypyrrole, polythiophene and so on, and they are used by being suitably selected. As an electrode forming method, use is made of a method in which the materials mentioned above are made to a thin film to perform patterning by means of sputtering method, vacuum vapor deposition method, CVD (chemical vapor deposition) method, coating method and so on, or, a method of laminating metal foils (for example dolled copper foil), or, a method in which conductive materials and solvents are mixed with synthetic resin binder and the mixture is sprayed to perform patterning.

A transparency is necessary for the conductive film (electrode) arranged to the information display screen region of the panel substrate at an observation side when viewing, but it is not necessary for the conductive film (electrode) arranged to the other region. In both cases, the materials mentioned above, which are conductive and have a pattern formation capability, can be suitably used. Additionally, the thickness of the conductive film may be suitable unless the electro-conductivity is absent or any hindrance exists in optical transparency, and it is preferable to be 0,01 to 10 $\mu$m, more preferable to be 0.05 to 5 $\mu$m. As the material and the thickness of the conductive film (including the conductive film 5 and the dot electrode 7) arranged to the panel substrate at a rear side when viewing are not the same as those of the electrode arranged to the substrate at the display side, it is not necessary to consider optical transparency.

As the partition wall arranged to the substrate according to need, a shape of the partition wall is suitably designed in accordance with a kind of the display media used for the display or the shape and arrangement of the electrodes, and is not restricted. However, it is preferred to set a width of the partition wall to 2 - 100 μm more preferably 3 - 50 μm and to set a height of the partition wall to 10 - 500 μm more preferably 10 - 200 μm.

Moreover, as a method of forming the partition wall, use may be made of a double rib method wherein ribs are formed on the opposed substrates 1, 2 respectively and they are connected with each other and a single rib method wherein a rib is formed on one of the opposed substrates only. The present invention may be preferably applied to both methods mentioned above.

The cell formed by the partition walls each made of rib has a square shape, a triangular shape, a line shape, a circular shape and a hexagon shape, and has an arrangement such as a grid, a honeycomb and a mesh. In the case that the display media sealed in the cell are particles, it is preferred to machine a corner of the cell to a round shape so as to move the particles in the cell easily. Therefore, use is preferably made of a polygonal shape such as a square shape with round corner, a hexagonal shape with round corner, a stepwise octagonal shape with round corner. It is preferred that the portion corresponding to a cross section of the partition wall observed from the display side (an area of the frame portion of the cell) should be made as small as possible. In this case, a clearness of the image display can be improved.

The formation method of the partition wall is not particularly restricted, however, a die transfer method, a screen-printing method, a sandblast method, a photolithography method and an additive method may be preferably used for the information display panel according to the invention, Among them, it is preferred to use a photolithography method using a resist film or a die transfer method.

Moreover, as the non-conductive film arranged as the antistatic layer 8, it is preferred to use polymer material having a surface resistivity of $1.0 \times 10^5 \Omega$/sq. - $1.0 \times 10^{12} \Omega$/sq., such as acrylic resin, polyamide resin (such as nylon), polyurethane resin, polyester resin, polycarbonate resin, epoxy resin, and so on.

Further, as the protection film of the TFT substrate, it is preferred to use polymer material having a surface resistivity of not less than $1.0 \times 10^5 \Omega$/sq., such as acrylic resin, polyamide resin (such as nylon), polyurethane resin, polyester resin, polycarbonate resin, epoxy resin, and so on.

Then, the particles including the particle having charging property used for the information display panel constituting a part of the information display system according to the invention will be explained. The chargeable particle may be composed of resins as a main ingredient, and can include according to need charge control agents, coloring agent, inorganic additives and so on, as is the same as the known one. Hereinafter, typical examples of charge control agent, coloring agent, additive and so on will be explained.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc, can be employed as the electric charge control agent.

As for a coloring agent, various kinds of organic or inorganic pigments or dye having various colors as will be described below are employable.

Examples of black pigments include carbon black, copper oxide, manganese dioxide, aniline black, and activate carbon.

Examples of blue pigments include C.I. pigment blue 15: 3, C.I. pigment blue 15, Berlin blue, cobalt blue, alkali blue lake, Victoria blue lake, phthalocyanine blue, metalfree phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7,Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent. The particles having a desired color can be produced by mixing the coloring agents mentioned above.

Moreover, as the average particle diameter d (0.5) of the particles having charging property (hereinafter, called sometimes as particles), it is preferred to set d (0.5) to 1 - 20 $\mu$m and to use even particles. If the average particle diameter d (0.5) exceeds this range, the image clearness sometimes deteriorated, and, if the average particle diameter is smaller than this range, an agglutination force between the particles becomes larger and the movement of the particles is prevented.

Further, it is preferred that particle diameter distribution Span of the particles, which is defined by the following formula, is less than 5 preferably less than 3:

$$\text{Span} = (d(0.9) - d(0.1))/d(0.5) \ ;$$

(here, d (0.5) means a value of the particle diameter expressed by $\mu$m wherein an amount of the particles having the particle diameter larger than or smaller than this value is 50%, d(0.1) means a value of the particle diameter expressed by $\mu$m wherein an amount of the particles having the particle diameter smaller than this value is 10%, and d (0.9) means a value of the particle diameter expressed by $\mu$m wherein an amount of the particles having the particle diameter smaller than this value is 90%).

If the particle diameter distribution Span of the particles is set to not more than 5, the particle diameter becomes even and it is possible to perform an even particle movement.

Furthermore, in the case of using a plurality of particles as the display media, it is preferred to set a ratio of d (0.5) of the particles having smallest diameter with respect to d (0.5) of the particles having largest diameter to not more than 10 preferably not more than 10. The particles having different charge characteristics with each other are moved reversely, even if the particle diameter distribution Span is made smaller. Therefore, it is preferred that the particle sizes of the particles are made to be even with each other, and same amounts of the particles are easily moved in a reverse direction, and thus that is this range.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution.

In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

Further, in the dry-type information display panel in which the display media constituted by the particles having charging property are driven in a gas space, it is important to control a gas in a gap surrounding the display media between the substrates, and a suitable gas control contributes an improvement of display stability. Specifically, it is important to control a humidity of the gap gas to not more than 60% RH at 25°C, preferably not more than 50% RH.

The above gap means a gas portion surrounding the display media obtained by substituting the electrodes 5, 6 (in the case of arranging electrode inside of substrate), an occupied portion of the display media, an occupied portion of the partition walls 4 and a seal portion of the device from the space between the substrate 1 and the substrate 2.

A kind of the gap gas is not limited if it has the humidity mentioned above, but it is preferred to use dry air, dry nitrogen gas, dry argon gas, dry helium gas, dry carbon dioxide gas, dry methane gas and so on. It is necessary to seal this gas in the information display panel so as to maintain the humidity mentioned above. For example, it is important to perform the operations of filling the display media and assembling the substrate under an atmosphere having a predetermined humidity and to apply a seal member and a seal method for preventing a humidity inclusion from outside of the device.

In the information display panel according to the invention, an interval between the substrates is not restricted if the display media can be moved and a contrast can be maintained, and it is adjusted normally to 2 $\mu$m - 500 $\mu$m, preferably 5 $\mu$m -200 $\mu$m.

Moreover, in the information display panel of the charged particles moving type, an interval between the substrates is adjusted normally to 10 $\mu$m - 100 $\mu$m, preferably 10 $\mu$m - 50 $\mu$m. Further, it is preferred to control a volume occupied rate of the display media in a space between the opposed substrates to 5 - 70 %, more preferably 5 - 60 %. If the volume occupied rate of the display media exceeds 70 %, the display media become difficult to move, and if it is less than 5 %, a sufficient contrast cannot be obtained and a clear image display is not performed.

INDUSTRIAL APPLICABILITY

The information display system according to the invention provide the thin and light information display panel and the thin and compact drive device. In the information display system, the information display panel is attached to the TFT substrate portion of the drive device, and the connection terminal of the drive device and the connection terminal of the information display panel are electrically connected, thereby displaying desired information on the information display panel by operating the drive device. In this case, it is possible to detach the information display panel from the drive device and to take the information display panel, on which the displayed information is maintained, anywhere. Moreover, in the information display system according to the invention, since the information display system can be constructed by the thin and light information display panel and the thin and compact drive device, it is possible to bring overall information display system anywhere. Therefore, the information display panel constituting the information display system according to the invention is preferably applicable to a recycle paper such as recycle memo pad, recycle notebook, recycle advertising card, documents distributed for meeting and so on.

DESCRIPTIONS OF NUMERALS

1        second panel substrate of information display panel
2        first panel substrate of information display panel
3        display media layer
3W       white color display media
3 Wa     negatively chargeable white color particle
3B       black color display media
3Ba      positively chargeable black color particle
4        partition walls
5        conductive film
6        cell
7        dot electrode
8        antistatic layer
9        information display panel
10       seal agent
11       substrate made of conductive material
21       TFT substrate portion of drive device
22       substrate
23       TFT circuit
24       pixel electrode
25       semiconductor layer
26       gate electrode
27       source electrode
28       drain electrode
29       protection layer (protection film)
31       drive device
32       drive device base
33       drive circuit
41       insulation solvent
42       micro capsule
43       colored insulation solvent
51       connection terminal of information display panel
52       connection terminal of drive device

Claims

1. An information display system comprising: at least one information display panel having a first panel substrate and a second panel substrate opposed to the first panel substrate, at least one of the two substrates being transparent at an information display screen area, and display media disposed between the first panel substrate and the second panel substrate and driven by an electric field; and a drive device formed separately with the information display panel and having a thin film transistor (TFT) substrate in which pixel electrodes with a thin film transistor (TFT) are disposed;
wherein the first panel substrate of the information display panel has conductivity along a surface direction;
wherein the second panel substrate of the information display panel has no conductivity along a surface direction;
wherein a surface at a side of the second panel substrate of the information display panel is disposed in such a manner that it is opposed in such a manner that it is opposed to a surface of the TFT substrate of the drive device, and a portion having a conductivity along a surface direction of the first panel substrate of the information display panel is electrically connected to the drive device; and
wherein the display media of the information display panel are moved by an electric field generated between the first panel substrate of the information display panel and the pixel electrodes on the TFT substrate of the drive device so as to display information on the information display screen region.

2. The information display system according to claim 1, wherein a thickness of the second panel substrate is thinned than that of the first panel substrate.

3. The information display system according to claim 1 or 2, wherein the pixel electrodes each having the thin film transistor (TFT) are disposed in a matrix manner in the TFT substrate in which the pixel electrodes each having the thin film transistor (TFT) are disposed.

4. The information display system according to claim 1 or 2, wherein the pixel electrodes each having the thin film transistor (TFT) are disposed independently in the TFT substrate in which the pixel electrodes each having the thin film transistor (TFT) are dis-

posed.

in a contact and opposed manner.

5. The information display system according to one of claims 1 - 4, wherein dot electrodes are arranged on an inner surface of the substrate at a side of the second panel substrate of the information display panel.

6. The information display system according to one of claims 1 - 5, wherein a film having a surface resistivity of $1.0 \times 10^5 \Omega/\text{sq.}$ - $1.0 \times 10^5 \Omega/\text{sq.}$ is arranged on an outer surface of the second panel substrate of the information display panel.

7. The information display system according to one of claims 1 - 6, wherein the first panel substrate having conductivity along a surface direction includes: a substrate formed by an insulation material; and a conducting film formed at the information display screen region on an inner surface of the substrate formed by an insulation material.

8. The information display system according to one of claims 1 - 6, wherein the first panel substrate having conductivity along a surface direction includes: a substrate formed by a conducting material; and an isolation film coated on an overall outer surface of the substrate formed by a conducting material.

9. The information display system according to one of claims 1 - 8, wherein a protection film is disposed on a surface of the pixel electrode on the TFT substrate of the drive device.

10. An information display method using the information display system set forth in one of claims 1 - 9, comprising the steps of:

disposing a surface at a side of the second panel of the information display panel to a surface of the TFT substrate of the drive device in an opposed manner;
electrically connecting a portion having a conductivity along a surface direction of the first panel substrate of the information display panel to the drive device; and
moving the display media of the information display panel by an electric field generated between the first panel substrate of the information display panel and the pixel electrodes on the TFT substrate of the drive device so as to display information on the information display screen region.

11. The information display method according to claim 10, wherein a surface at a side of the second panel substrate of the information display panel is disposed to a surface of the TFT substrate of the drive device

EP 2 437 249 A1

# FIG. 1

(a)

(b)

(c)

## FIG. 2

observation surface

## FIG. 3

observation surface

# FIG. 4

## (a)

## (b)

## (c)

longitudinal section of dot

# FIG. 5

EP 2 437 249 A1

# FIG. 6

20

# FIG. 7

9   3Wa   insulation film

11

10   3W   3B

4   6   3Ba   1

observation surface

# FIG. 8

(a)

(b)

# FIG. 9

# FIG. 10

# FIG. 11

# FIG. 12

(a)

21

24

(b)

24

21

# FIG. 13

(a)

(b)

# FIG. 14

(a)

(b)

# FIG. 15

(a)

(b)

# FIG. 16

plural sheets of
information
display panel

one sheet of
information
display panel ← 9

one sheet of information
display panel

9

51

# FIG. 17

(a)

(b)

# FIG. 18

(a)

(b)

## INTERNATIONAL SEARCH REPORT

| International application No. |
| --- |
| PCT/JP2010/003608 |

A.   CLASSIFICATION OF SUBJECT MATTER
*G09G3/34*(2006.01)i, *G02F1/167*(2006.01)i, *G02F1/17*(2006.01)i, *G09G3/20* (2006.01)i

According to International Patent Classification (IPC) or to both national classification and IPC

B.   FIELDS SEARCHED

Minimum documentation searched (classification system followed by classification symbols)
G09G3/34, G02F1/167, G02F1/17, G09G3/20

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2009-3179 A  (Fuji Xerox Co., Ltd.),<br>08 January 2009 (08.01.2009),<br>entire text; all drawings<br>(Family: none) | 1-4,7-11<br>5-6 |
| Y | JP 2008-145683 A  (Bridgestone Corp.),<br>26 June 2008 (26.06.2008),<br>paragraphs [0005], [0027]; fig. 4<br>(Family: none) | 5 |
| Y | JP 2003-182009 A  (Mitsubishi Polyester Film Corp.),<br>03 July 2003 (03.07.2003),<br>entire text; all drawings<br>(Family: none) | 6 |

☒   Further documents are listed in the continuation of Box C.   ☐   See patent family annex.

| | |
| --- | --- |
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>     10 June, 2010 (10.06.10) | Date of mailing of the international search report<br>     22 June, 2010 (22.06.10) |
| --- | --- |
| Name and mailing address of the ISA/<br>     Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/003608

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-98319 A  (Toshiba Corp.),<br>07 May 2009 (07.05.2009),<br>entire text; all drawings<br>(Family: none) | 1-11 |
| A | JP 2008-158067 A  (Fuji Xerox Co., Ltd.),<br>10 July 2008 (10.07.2008),<br>paragraphs [0117] to [0120]; fig. 6<br>(Family: none) | 1-11 |

Form PCT/ISA/210 (continuation of second sheet) (July 2009)

**EP 2 437 249 A1**

**Patent documents cited in the description**

- WO 200134199 A